# FASCICULE DE BREVET EUROPEEN

(11) **EP 3 174 795 B1**
(45) Date de publication et mention de la délivrance du brevet: **01.12.2021**
(21) Numéro de dépôt: 15756968.2
(22) Date de dépôt: 27.07.2015
(51) Int. Cl.: B64G 1/42, B64G 1/40, F03H 1/00

(54) **SYSTEME ET PROCEDE DE PROPULSION SPATIALE**
ANTRIEBSSYSTEM FÜR RAUMFAHRZEUG UND VERFAHREN
SPACECRAFT PROPULSION SYSTEM AND METHOD

(30) Priorité: 30.07.2014 FR 1457371
(43) Date de publication de la demande: 07.06.2017
(73) Titulaire: SAFRAN AIRCRAFT ENGINES, 75015 Paris (FR)
(72) Inventeur: MARCHANDISE, Frédéric, F-27200 Vernon (FR)
(74) Mandataire: Cabinet Beau de Loménie
(86) Numéro de dépôt international: PCT/FR2015/052067
(87) Numéro de publication internationale: WO 2016/016563

(56) Documents cités:
- WO-A1-2013/034825
- WO-A2-2008/035053
- FR-A1- 2 986 213
- Andrea Garulli ET AL: "Autonomous station keeping for LEO missions with a hybrid continuous/impulsive electric propulsion system", , 11 septembre 2011 (2011-09-11), XP055192322, Extrait de l'Internet: URL:http://erps.spacegrant.org/uploads/ima ges/images/iepc_articledownload_1988-2007/ 2011index/IEPC-2011-287.pdf [extrait le 2015-05-29]
- FRIEMAN JASON D. ET AL: "Electrical Facility Effects on Hall Thruster Cathode Coupling: Performance and Plume Properties", JOURNAL OF PROPULSION AND POWER., vol. 32, no. 1, 17 August 2015 (2015-08-17), pages 251-264, XP055774913, US ISSN: 0748-4658, DOI: 10.2514/1.B35683 Retrieved from the Internet: URL:http://mwalker.gatech.edu/papers/2015_ Electrical_Facility_Effects_on_Hall_Thrust er.pdf>
- Page R J ET AL: "The design and performance of a 3kw concentric tube resistojet", NASA-CR-54410 TMC Report 25168, 1 September 1965 (1965-09-01), XP055774929, Retrieved from the Internet: URL:https://ntrs.nasa.gov/api/citations/19 650024628/downloads/19650024628.pdf [retrieved on 2021-02-11]

## Description

La présente invention concerne le domaine de la propulsion spatiale.

Dans ce domaine, les propulseurs électriques deviennent de plus en plus courants, notamment pour la commande d'orientation et orbite d'engins spatiaux. En effet, les différents types de propulseurs électriques disponibles offrent une impulsion spécifique généralement plus élevée que les propulseurs chimiques ou à gaz froids conventionnels, permettant ainsi de réduire la consommation de fluide propulseur pour les mêmes manoeuvres, avec en conséquence une augmentation de la durée de vie et/ou la charge utile des engins spatiaux. Parmi les différent types de propulseurs électriques, on connaît notamment deux catégories : les propulseurs dits thermoélectriques, dans lesquels le fluide propulseur est chauffé électriquement avant son expansion dans une tuyère propulsive, et ceux dits électrostatiques, dans lesquels le fluide propulseur est ionisé et directement accéléré par un champ électrique. On compte, parmi les propulseurs thermoélectriques, notamment ceux dits résistojets, dans lesquels la chaleur est transmise au fluide propulseur par au moins une résistance chauffée par effet de Joule. D'autre part, parmi les propulseurs électrostatiques, on compte notamment les propulseurs dits à effet Hall. Dans ces propulseurs, dits aussi moteur à plasma à dérive fermée d'électrons ou moteurs à plasma stationnaire, des électrons émis par une cathode émettrice sont capturés par un champ magnétique généré par des bobines situées autour et au centre d'un canal de décharge à section annulaire, formant ainsi une grille cathodique virtuelle en bout de ce canal de décharge. Le fluide propulsif (typiquement du xénon à l'état gazeux) est injecté au fond du canal de décharge et des électrons échappant de cette grille cathodique virtuelle vers une anode située au fond du canal de décharge viennent impacter des molécules du fluide propulsif, ionisant celui-ci, qui est en conséquence accéléré en direction de la grille cathodique virtuelle par le champ électrique régnant entre celle-ci et l'anode, avant d'être neutralisé par d'autres électrons émis par la cathode émettrice. Typiquement, afin d'assurer l'émission d'électrons à partir de la cathode, celle-ci est électriquement chauffée.

Les propulseurs à effet Hall ne sont par ailleurs pas les seuls comprenant des cathodes émettrices similaires. Un autre exemple de propulseur électrostatique avec une cathode analogue est le propulseur dit propulseur plasmatique multi-étages à haute efficacité ou HEMP, d'après son acronyme anglais (« High Efficiency Multistage Plasma Thruster »), décrit par exemple par H.-P. Harmann, N. Koch et G. Kornfeld dans « Low Complexity and Low Cost Electric Propulsion System for Telecom Satellites Based on HEMP Thruster Assembly », IEPC-2007-114, 30th International Electric Propulsion Conference, Florence, Italie, 17-20 Septembre 2007. Dans un tel propulseur HEMP, le fluide propulsif ionisé est accéléré par un champ électrique formé entre une anode et une pluralité de grilles cathodiques virtuelles formées par des électrons piégés par les champs magnétiques d'une pluralité d'aimants permanents. En général, tous les propulseurs électrostatiques comprennent une cathode émettrice au moins pour neutraliser le fluide propulsif en aval du propulseur.

Les propulseurs électrostatiques permettent d'obtenir des impulsions spécifiques particulièrement élevées en comparaison à d'autres types de propulseurs, y compris les propulseurs thermoélectriques. Par contre, leur poussée est très peu élevée. Des systèmes de propulsion spatiale ont donc été proposés combinant des propulseurs électrostatiques pour les manœuvres lentes, comme par exemple le maintien d'orbite ou la désaturation de roues de réaction, et des propulseurs d'autres types pour des manœuvres nécessitant des poussées plus élevées. Ainsi, M. De Tata, P.-E. Frigot, S. Beekmans, H. Lübberstedt, D. Birreck, A. Demairé et P. Rathsman, dans « SGEO Development Status and Opportunities for the EP-based Small European Télécommunication Platform », IEPC-2011-203, 32nd International Electric Propulsion Conference, Wiesbaden, Allemagne, 11-15 Septembre 2011 et S. Naclerio, J. Soto Salvador, E. Such, R. Avenzuela et R. Perez Vara, dans « Small GEO Xenon Propellant Supply Assembly Pressure Regulator Panel : Test Results and Comparison with ECOSIMPRO Predictions », SP2012-2355255, 3rd International Conference on Space Propulsion, Bordeaux, 7-10 Mai 2012, ont décrit un système de propulsion spatiale pour petits satellites géostationnaires, comprenant des propulseurs électrostatiques et des propulseurs à gaz froid alimentés par un circuit commun d'alimentation en fluide propulsif. Toutefois, l'impulsion spécifique des propulseurs à gaz froid est très limitée, ce qui les fait très gourmands en fluide propulsif pour des manœuvres à forte poussée, et par ailleurs la mutualisation de ressources entre les différents types de propulseurs dans ce système n'est pas très importante, résultant en une complexité assez élevée du système. La demande de brevet français FR 2 986 213 A1 divulguait un système de propulsion spatiale combinant des propulseurs électrostatiques et chimiques, tandis que l'article « Autonomous station keeping for LEO missions with a hybrid continuous/impulsive electric propulsion system » d'Andrea Garulli et autres, 32nd International Electric Propulsion Conference, Wiesbaden, Germany, September 11-15, 2011, IEPC-2011-287, décrivait un système de propulsion spatiale combinant des propulseurs électrostatiques et des résistojets, avec toutefois une importante complexité de l'alimentation électrique.

### Objet et résumé de l'invention

La présente invention vise à remédier à ces inconvénients. En particulier, cette divulgation vise à proposer un système de propulsion spatiale qui permette d'offrir au moins un premier mode de propulsion, à haute impulsion spécifique mais faible poussée, et un deuxième mode de propulsion, à poussée plus élevée et impulsion spécifique plus faible que celle du premier mode, mais toutefois plus élevée que celle pouvant être fournie par des propulseurs à gaz froid, et ceci avec un circuit d'alimentation électrique relativement simple.

Dans au moins un mode de réalisation, ce but est atteint grâce au fait que le système de propulsion comprend un propulseur électrostatique avec au moins un premier consommateur électrique, un résistojet, un circuit d'alimentation en fluide propulsif, et un circuit d'alimentation électrique comportant au moins une première ligne d'alimentation électrique et un premier commutateur permettant de choisir entre connecter ladite première ligne d'alimentation au résistojet et connecter ladite première ligne d'alimentation audit premier consommateur électrique du propulseur électrostatique. L'utilisation d'un résistojet permet d'obtenir une impulsion spécifique plus élevée que les propulseurs à gaz froid, tout en permettant de continuer à partager au moins une partie du circuit d'alimentation en fluide propulsif pour l'alimentation en fluide propulsif du propulseur électrostatique et du résistojet. En même temps, le premier commutateur permet d'assurer l'alimentation électrique du résistojet à partir de la même ligne d'alimentation électrique servant alternativement à l'alimentation électrique d'un premier consommateur électrique du propulseur électrostatique, ce qui simplifie le circuit d'alimentation électrique.

Ledit premier consommateur électrique du propulseur électrostatique comprend un élément chauffant d'une cathode émettrice dudit propulseur électrostatique. Les éléments chauffants de telles cathodes émettrices et ceux des résistojets sont formés par des résistances électriques, et ledit premier commutateur permet de choisir entre connecter ladite première ligne d'alimentation électrique, sans conversion ou transformation de courant ou de voltage, à une résistance électrique formant un élément chauffant du résistojet, et connecter ladite première ligne d'alimentation électrique, sans conversion ou transformation de courant ou de voltage, à une résistance électrique formant l'élément chauffant de la cathode émettrice dudit propulseur électrostatique.

Afin de piloter l'alimentation du propulseur électrostatique et du résistojet en fluide propulsif, ledit circuit d'alimentation en fluide propulsif peut comporter au moins une vanne d'alimentation du propulseur électrostatique et au moins une vanne d'alimentation du résistojet En particulier, le système de propulsion peut comprendre en outre au moins une ligne de commande d'ouverture de vanne et un deuxième commutateur permettant de choisir entre connecter ladite ligne de commande d'ouverture de vannes à la vanne d'alimentation du propulseur électrostatique et connecter ladite ligne de commande d'ouverture de vannes à l'au moins une vanne d'alimentation du résistojet. Selon le mode de propulsion sélectionné, une même ligne de commande d'ouverture de vanne peut ainsi alternativement commander l'alimentation du propulseur électrostatique ou du résistojet en fluide propulsif, simplifiant ainsi la commande des vannes.

Typiquement dans les propulseurs électrostatiques, une tension électrique particulièrement élevée doit être établie entre une cathode et une anode afin de générer le champ électrique assurant l'accélération du fluide propulsif ionisé. Cette tension est normalement sensiblement plus élevée que celle de l'alimentation électrique du chauffage de la cathode émettrice, ou que celle fournie par les sources électriques embarquées sur un engin spatial, telles que panneaux photovoltaïques, batteries, piles à combustible ou générateurs thermoélectriques. Afin de fournir aussi cette haute tension, ledit circuit d'alimentation électrique peut comporter en outre au moins une unité de conditionnement électrique apte à alimenter au moins un autre consommateur électrique du propulseur électrostatique à une tension sensiblement plus élevée que le premier consommateur électrique. La première ligne d'alimentation électrique peut être au moins partiellement intégrée dans ladite unité de conditionnement électrique, quoiqu'elle puisse aussi alternativement contourner l'unité de conditionnement électrique et être connectée directement à une barre de distribution d'un réseau électrique d'engin spatial ou à des sources d'alimentation électrique embarquées.

Ledit circuit d'alimentation électrique peut comprendre au moins une unité de sélection de propulseur dans laquelle au moins ledit premier commutateur soit intégré. Ainsi, si plusieurs connexions doivent être commutées simultanément pour sélectionner l'un ou l'autre propulseur, tous les commutateurs correspondants peuvent éventuellement être intégrés dans une telle unité de sélection de propulseur, et être commandés par une même commande.

Ledit propulseur électrostatique peut notamment être un propulseur à effet Hall. En effet, les propulseurs à effet Hall ont déjà abondamment prouvé leur fiabilité dans la propulsion spatiale. Toutefois, d'autres types de propulseur électrostatique sont également envisageables, et notamment les propulseurs HEMP.

Afin notamment d'assurer une propulsion sur plusieurs axes différents, ce système de propulsion spatiale peut comprendre une pluralité de propulseurs électrostatiques. Dans ce cas, afin de simplifier l'alimentation en gaz propulsif de cet ensemble, le circuit d'alimentation en fluide propulsif peut comprendre au moins un dispositif de régulation de pression commun à plusieurs desdits propulseurs électrostatiques. Toutefois, complémentairement ou alternativement à au moins un dispositif de régulation de pression commun à plusieurs desdits propulseurs électrostatiques, circuit d'alimentation en fluide propulsif peut comprendre un dispositif de régulation de pression individuel pour au moins un desdits propulseurs électrostatiques.

La présente divulgation concerne également un système de commande d'orientation et/ou trajectoire comprenant un tel système de propulsion spatiale, un engin spatial, comme par exemple un satellite ou une sonde, comprenant un tel système de propulsion spatiale, ainsi qu'un procédé de propulsion spatiale comprenant une étape de commutation entre un propulseur électrostatique et un résistojet, dans laquelle un premier commutateur est utilisé pour connecter une première ligne d'alimentation électrique, sans conversion ou transformation de courant ou de voltage, à une résistance électrique formant un élément chauffant du résistojet ou à une résistance électrique formant un élément chauffant d'une cathode émettrice du propulseur électrostatique, pour sélectionner un premier mode de propulsion, dans lequel le résistojet est activé, ou un deuxième mode de propulsion, dans lequel le propulseur électrostatique est activé.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 est une vue schématique d'un engin spatial équipé d'un système de commande d'orientation et trajectoire avec un système de propulsion spatiale suivant l'un quelconque des modes de réalisation ;
- la figure 2A est un schéma détaillé illustrant un système de propulsion spatiale suivant un premier mode de réalisation, avec des commutateurs en position de sélection d'un propulseur électrostatique ;
- la figure 2B est un schéma détaillé illustrant le système de la figure 2B, avec les mêmes commutateurs en position de sélection d'un résistojet ;
- la figure 3 est un schéma détaillé illustrant un système de propulsion spatiale suivant un deuxième mode de réalisation ;
- la figure 4 est un schéma détaillé illustrant un système de propulsion spatiale suivant un troisième mode de réalisation ; et
- la figure 5 est un schéma détaillé illustrant un système de propulsion spatiale suivant un quatrième mode de réalisation.

### Description détaillée de l'invention

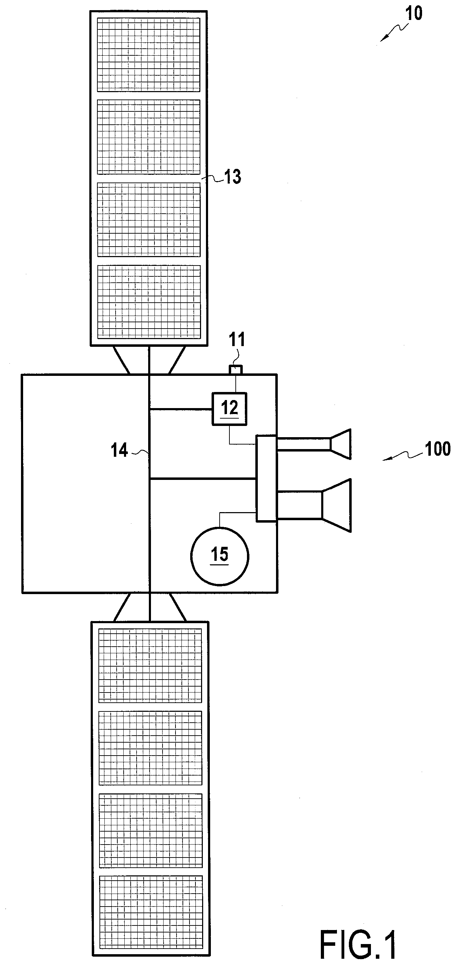

La figure 1 illustre un engin spatial 10, plus spécifiquement un satellite, équipé avec un système de commande d'orientation et trajectoire servant à maintenir l'orbite et l'orientation de l'engin spatial par rapport au corps qu'il orbite. Pour cela, le système de commande d'orientation et trajectoire comprend, à part au moins un capteur 11 destiné à déterminer l'orientation et trajectoire réelles de l'engin spatial, et une unité de commande 12, connectée au capteur 11 et destinée à déterminer l'orientation et trajectoire souhaitées et les manœuvres à effectuer pour atteindre ces orientation et trajectoire souhaitées à partir de l'orientation et trajectoire réelles déterminées grâce à l'au moins un capteur 11, des moyens de manœuvre connectés à l'unité de commande 12, et capables d'exercer des forces et des couples sur l'engin spatial 10 afin d'effectuer lesdites manœuvres. Dans l'exemple illustré, ces moyens de manoeuvre comprennent notamment un système de propulsion spatiale 100, quoique d'autres moyens de manœuvre, tels que des dispositifs inertiels comme les roues de réaction, ou des dispositifs utilisant la pression de la radiation solaire, peuvent être envisagés en complément à ce système de propulsion spatiale 100.

Par ailleurs, l'engin spatial 10 comprend en outre une source d'alimentation électrique 13, sous forme de panneaux photovoltaïques dans l'exemple illustré, quoique d'autres sources d'alimentation électrique, par exemple des batteries, piles à combustible ou générateurs thermoélectriques, soient également envisageables en complément ou alternativement à ces panneaux photovoltaïques. Cette source d'alimentation électrique 13 est connectée aux différents consommateurs électriques de l'engin spatial à travers un bus principal d'alimentation 14.

En outre, l'engin spatial 10 comprend aussi au moins un réservoir 15 de fluide propulsif, tel que par exemple du Xénon.

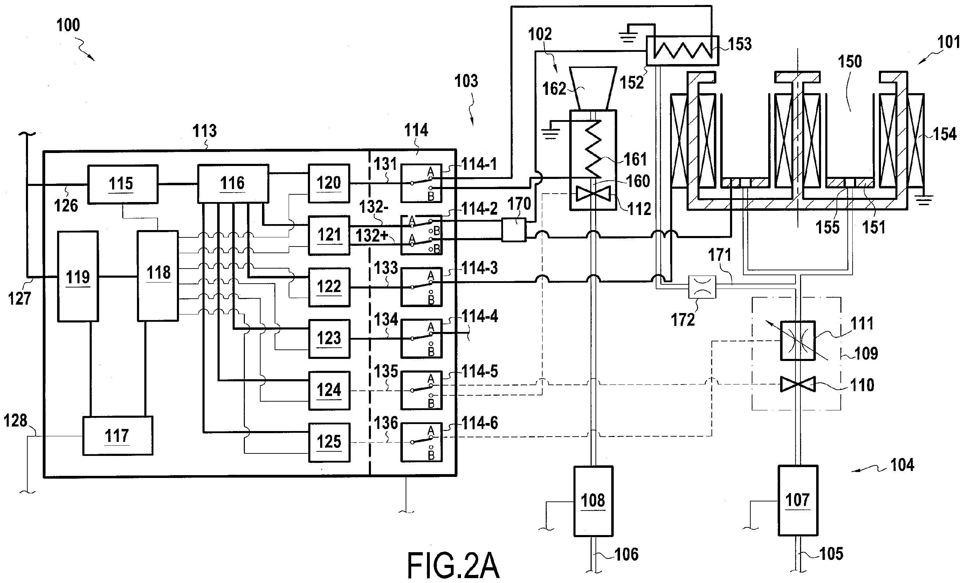

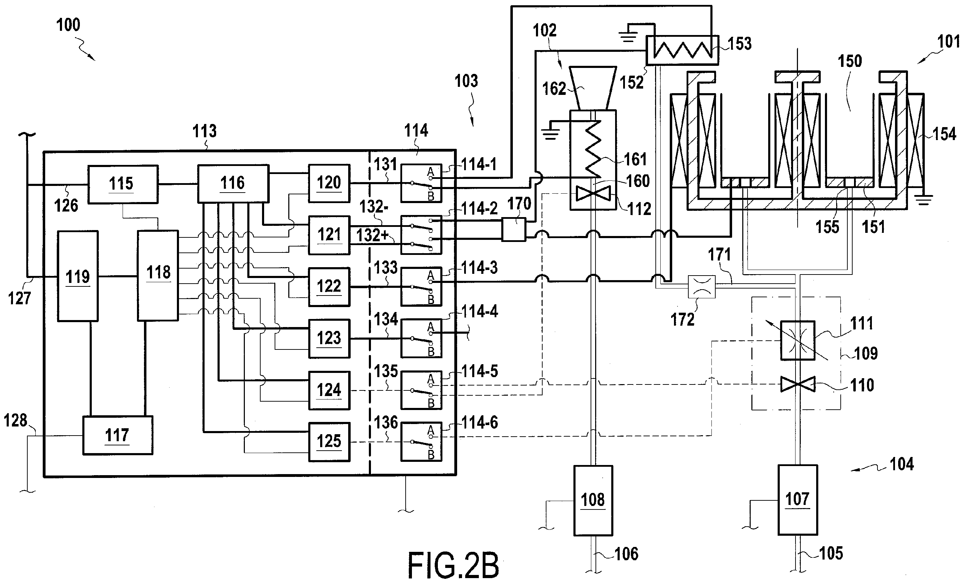

Les figures 2A et 2B illustrent le système de propulsion spatiale 100 suivant un premier mode de réalisation. Ce système de propulsion spatiale 100 comprend un propulseur électrostatique 101 et un résistojet 102. En outre, il comprend aussi un circuit 103 d'alimentation électrique, et un circuit 104 d'alimentation en fluide propulsif, tous les deux connectés aux deux propulseurs pour leur alimentation en, respectivement, électricité et fluide propulsif. Le circuit 103 d'alimentation électrique est connecté à la source d'alimentation électrique 13 de l'engin spatial 10 à travers le bus 14. Le circuit 104 d'alimentation en fluide propulsif est connecté au réservoir 15.

Le propulseur électrostatique 101, qui est plus spécifiquement un propulseur à effet Hall, comprend un canal 150 à section annulaire, fermé à son extrémité amont et ouvert à son extrémité aval, une anode 151 située à l'extrémité amont du canal 150, une cathode émettrice 152, située en aval de l'extrémité aval du canal 150 et équipée d'au moins un élément chauffant 153, des électroaimants 154, situés radialement à l'intérieur et à l'extérieur du canal 150, et des injecteurs 155 de fluide propulsif, situées à l'extrémité amont du canal 150.

Le résistojet 102 est plus simple, comprenant principalement au moins un injecteur 160 de fluide propulsif, un élément chauffant 161, et une tuyère 162.

Comme on peut aussi voir sur les figures 2A et 2B, le circuit 104 d'alimentation en fluide propulsif 104 comprend une ligne 105 d'alimentation du propulseur électrostatique 101 en fluide propulsif connectée aux injecteurs 155 du propulseur électrostatique 101, et une ligne 106 d'alimentation du résistojet 102 en fluide propulsif connectée à l'injecteur 162 du résistojet 102. Sur la ligne 105 est installé un régulateur 107 de pression d'alimentation du propulseur électrostatique 101 en gaz propulsif, tandis qu'un régulateur 108 de pression d'alimentation du résistojet 102 est installé sur la ligne 106. Ces régulateurs de pression 107, 108 permettent ainsi d'assurer des pressions sensiblement constantes d'alimentation des deux propulseurs, même quand la pression du réservoir 15 varie fortement. Même si dans le mode de réalisation illustré deux régulateurs de pression différents sont utilisés afin d'obtenir des pressions d'alimentation différentes, il serait également envisageable d'utiliser un seul régulateur de pression commun pour fournir une même pression aux deux propulseurs.

Un régulateur de débit 109 est également installé sur la ligne 105 d'alimentation du propulseur électrostatique 101 en gaz propulsif, en aval du régulateur de pression 107 mais encore en amont des injecteurs 155 de fluide propulsif dans le propulseur électrostatique 101. Ce régulateur de débit 109 comprend une vanne tout-ou-rien 110 et un thermorestricteur 111 installés en série pour, respectivement, commander l'alimentation du propulseur électrostatique 101 en gaz propulsif et réguler son débit. Par ailleurs, le circuit 104 d'alimentation en fluide propulsif 104, comprend aussi une dérivation 171 reliant la ligne 105 en aval du régulateur de débit 109 à la cathode 152, afin d'apporter un débit très restreint de gaz à cette cathode 152, qui est une cathode creuse, de manière à faciliter l'émission d'électrons à partir de la cathode 152, ainsi que son refroidissement. Un étranglement 172 sur cette dérivation 171 restreint le débit de gaz propulsif fourni à la cathode par rapport à celui qui est injecté à travers les injecteurs 155.

Le circuit 104 d'alimentation en fluide propulsif comprend aussi une vanne 112 d'alimentation du résistojet 102 en gaz propulsif, directement intégrée dans le résistojet 102, en amont de l'injecteur 160, dans le mode de réalisation illustré, quoiqu'il soit aussi alternativement envisageable de l'installer sur la ligne 106, entre le régulateur de pression 108 et le résistojet 102.

Le circuit d'alimentation électrique 103 comprend une unité 113 de conditionnement électrique (ou PPU, suivant l'acronyme anglais de « Power Processing Unit ») avec une unité 114 de sélection de propulseurs (ou TSU, suivant l'acronyme anglais de « Thruster Selection Unit »). Bien que dans le mode de réalisation illustré l'unité de sélection 114 soit intégrée dans l'unité de conditionnement 113, il est également envisageable de l'arranger à l'extérieur de celle-ci. Dans ce cas, une telle unité externe de sélection de propulseurs peut recevoir l'acronyme anglais ETSU (« External Thruster Selection Unit »).

L'unité de conditionnement électrique 113 comprend aussi un limiteur 115, des onduleurs 116, une interface de commande 117, un séquenceur 118, et un convertisseur de tension de courant continu 119.

Par ailleurs, l'unité de conditionnement électrique 113 comprend en outre un régulateur 120 de courant I_{H} d'alimentation d'élément chauffant, un régulateur 121 de tensions V_{D}⁺ ,V_{D}⁻ et courant I_{D} d'alimentation de l'anode 151 et la cathode 152, un régulateur 122 de courant I_{M} d'alimentation d'électroaimant, des régulateurs 123 de pulsations électriques d'allumage, un régulateur 124 de commande de vanne et un régulateur 125 de courant I_{TT} de commande de thermorestricteur. Pour leur alimentation électrique, ces régulateurs 120 à 125 sont tous reliés à une première entrée d'alimentation 126 de l'unité de conditionnement 113 à travers les onduleurs 116. L'interface de commande 117 et le séquenceur 118 sont reliés à une deuxième entrée d'alimentation 127 de l'unité de conditionnement 113 à travers le convertisseur 119 pour leur propre alimentation et, à travers une entrée de commande 128, à l'unité de commande 12 du système de commande d'orientation et trajectoire. Ils sont aussi connectés aux régulateurs 120 à 125 de manière à commander leur fonctionnement.

L'unité de sélection 114 comprend un ensemble de commutateurs connectés chacun à l'une des sorties des régulateurs 120 à 125 à travers une ligne d'alimentation électrique ou de commande correspondante. Ainsi, le régulateur 120 est connecté au commutateur 114-1 par une première ligne d'alimentation électrique 131, le régulateur 121 au double commutateur 114-2 par une deuxième et une troisième ligne d'alimentation électrique 132+, 132-, le régulateur 122 au commutateur 114-3 par une quatrième ligne d'alimentation électrique 133, le régulateur 123 au commutateur 114-4 par une cinquième ligne d'alimentation électrique 134, le régulateur 124 au commutateur 114-5 par une ligne 135 de commande d'ouverture de vanne, et celle du régulateur 125 au commutateur 114-6 par une ligne 136 de commande du thermorestricteur. Chaque commutateur peut basculer entre au moins un premier contact A et au moins un deuxième contact B, et l'unité de sélection 114 est connectée à l'unité de commande 12 de manière à permettre à celle-ci de commander la commutation simultanée de chaque commutateur.

Dans le mode de réalisation illustré, chaque contact A des commutateurs 114-1 à 114-4 d'un premier groupe est connecté à un consommateur électrique du propulseur électrostatique 101. Ainsi, le contact A du commutateur 114-1 est connecté à l'élément chauffant 153 de la cathode émettrice 152, et ceux des commutateurs 114-3 à 114-4 à, respectivement, les électroaimants 154 et des moyens d'allumage (non-illustrés) du propulseur électrostatique 101. Dans le mode de réalisation illustré, chacun de ces consommateurs électriques est mis à terre, de telle manière qu'un commutateur simple et une seule ligne aller d'alimentation électrique suffit à assurer l'alimentation de chacun d'entre eux. Il est toutefois également envisageable d'isoler chacun de ces consommateurs électriques et de se passer d'une mise à terre en utilisant des lignes retour et des doubles commutateurs connectés non seulement aux lignes aller, mais aussi aux lignes retour pour commuter ou interrompre leur contact. Ainsi, dans le mode de réalisation illustré, un des contacts A du double commutateur 114-2 est connecté à la cathode 152 à travers un dispositif de filtrage 170 et peut être connecté par le commutateur 114-2 à la ligne d'alimentation 132-, à polarité négative, et l'autre des contacts A du double commutateur 114-2 est connecté à l'anode 151 à travers le même dispositif de filtrage 170 et peut être connecté par le commutateur 114-2 à la ligne d'alimentation 132+, à polarité positive. En outre, chaque contact A des commutateurs 114-5 et 114-6 d'un deuxième groupe est connecté au régulateur de débit 109 de la ligne 105 d'alimentation du propulseur thermostatique 101 en fluide propulsif. En particulier, le contact A du commutateur 114-5 est connecté à la vanne 110, tandis que celui du commutateur 114-6 est connecté au thermorestricteur 111.

D'autre part, dans le mode de réalisation illustré, le contact B du commutateur 114-1 et celui du commutateur 114-5 sont connectés, respectivement, à l'élément chauffant 161 et à la vanne 112 du résistojet 102.

Ainsi, en fonctionnement, l'unité de conditionnement électrique 113 peut assurer l'alimentation électrique et commander l'alimentation en fluide propulsif soit du propulseur électrostatique 101, soit du résistojet 102, suivant une sélection opérée à travers l'unité 114 de sélection de propulseurs. De cette manière, quand les commutateurs 114-1 à 114-6 connectent les lignes d'alimentation électrique 131, 132+,132-, 133 et 134 au propulseur électrostatique 101 et les lignes de commande 135 et 136 au régulateur de débit 109, comme illustré sur la figure 2A, le propulseur électrostatique 101 peut être activé et commandé par l'unité de commande 12 de l'engin spatial 10, à travers l'unité de conditionnement électrique 113. En particulier, des signaux provenant de l'unité de commande 12 sont transmis aux régulateurs 120 à 125 à travers l'interface de commande 117 et le séquenceur 118, et commandent dans ce cas l'alimentation électrique des différents consommateurs électriques du propulseur électrostatique 101 à travers les régulateurs 120 à 123 d'une part, et d'autre part, à travers les régulateurs 124 et 125 et le régulateur de débit 109, l'alimentation du propulseur électrostatique 101 en fluide propulsif.

Par contre, quand les commutateurs 114-1 à 114-6 basculent vers les contacts B, comme illustré sur la figure 2B, la première ligne d'alimentation électrique 131 est connectée à l'élément chauffant 161 du résistojet 102, tandis que la ligne 135 de commande d'ouverture de vanne est connectée à la vanne 112 du résistojet 102. De cette manière, des signaux provenant de l'unité de commande 12 et transmis aux régulateurs 120 et 124 à travers l'interface de commande 117 et le séquenceur 118 peuvent alors commander l'alimentation électrique de l'élément chauffant 161 du résistojet 102 à travers le régulateur 120 d'une part, et d'autre part, à travers le régulateur 124 et la vanne 112, l'alimentation du résistojet 102 en fluide propulsif.

Le système de propulsion spatiale 100 suivant ce premier mode de réalisation peut donc fonctionner dans un premier mode de propulsion, à haute impulsion spécifique mais faible poussée, par sélection du propulseur électrostatique 101 à travers l'unité de sélection 114, ou dans un deuxième mode de propulsion, à impulsion spécifique moins élevée, par sélection du résistojet 102 à travers l'unité de sélection 114.

Bien que dans ce premier mode de réalisation l'alimentation du propulseur électrostatique 101 en fluide soit effectuée à travers un régulateur de pression et un régulateur de débit comprenant une vanne et un thermorestricteur, dans d'autres modes de réalisation l'alimentation du propulseur électrostatique en fluide peut s'effectuer à travers une unité de régulation conjointe de pression et débit comprenant deux vannes tout-ou-rien disposées en série. Grâce à l'impédance du circuit d'alimentation en fluide propulsif, notamment entre les deux vannes tout-ou-rien, il est possible de réguler pression et débit du fluide propulsif fourni au propulseur électrostatique en pilotant des pulsations des deux vannes tout-ou-rien. La pression du fluide propulsif fourni au résistojet peut également être pilotée de la même manière.

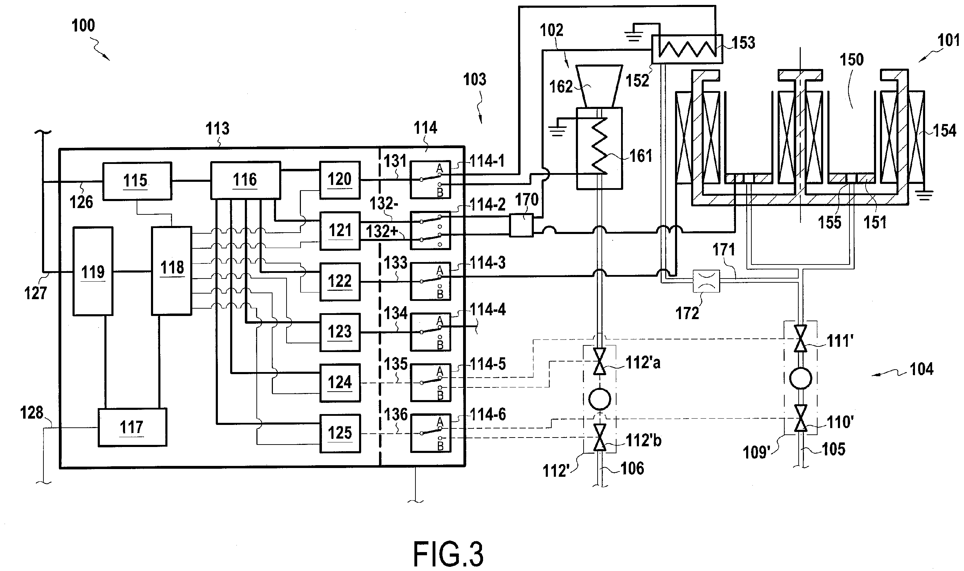

Ainsi, dans un deuxième mode de réalisation illustré sur la figure 3, les régulateurs de pression et de débit sur la première ligne d'alimentation en gaz fluidique du système propulsif selon le premier mode de réalisation peuvent être remplacés par un seul régulateur 109' de pression et débit comprenant deux vannes tout-ou-rien 110',111' arrangées en série sur la ligne 105 d'alimentation du propulseur électrostatique 101 en gaz propulsif. Dans ce deuxième mode de réalisation, la vanne du résistojet et le régulateur de pression correspondant sont également remplacées par un seul régulateur 112' de pression et débit comprenant aussi deux vannes tout-ou-rien 112'a, 112'b arrangées en série sur la ligne 106 d'alimentation du résistojet 102 en fluide propulsif. Dans l'unité 113 de conditionnement d'alimentation électrique, le régulateur de courant I_{TT} de commande de thermorestricteur du premier mode de réalisation est remplacé par un deuxième régulateur 125' de commande d'ouverture de vanne. Les autres éléments du système suivant ce deuxième mode de réalisation sont analogues à ceux du premier mode de réalisation et reçoivent en conséquence les mêmes chiffres de référence sur la figure 3 que sur les figures 2A et 2B.

Ainsi, lors du fonctionnement du système de propulsion spatiale 100 suivant ce deuxième mode de réalisation, quand le propulseur électrostatique 101 est sélectionné à travers l'unité 114 de sélection de propulseurs et ses commutateurs 114-1 à 114-6, des signaux provenant de l'unité de commande 12 et transmis aux régulateurs 124 et 125 à travers l'interface de commande 117 et le séquenceur 118 commandent les vannes 110',111' du régulateur 109' afin de réguler l'alimentation du propulseur électrostatique 101 en fluide propulsif. D'autre part, quand le résistojet 102 est sélectionné à travers l'unité 114 de sélection de propulseurs et ses commutateurs 114-1 à 114-6, ces mêmes signaux peuvent commander les vannes 112'a et 112'b du régulateur 112' afin de réguler l'alimentation du résistojet 102 en fluide propulsif. Pour le reste, le fonctionnement du système 100 de propulsion spatiale suivant ce deuxième mode de réalisation est analogue à celui du premier mode de réalisation, notamment en ce qui concerne la régulation de l'alimentation électrique du propulseur électrostatique 101 et du résistojet 102, et la sélection de deux modes de propulsion différents.

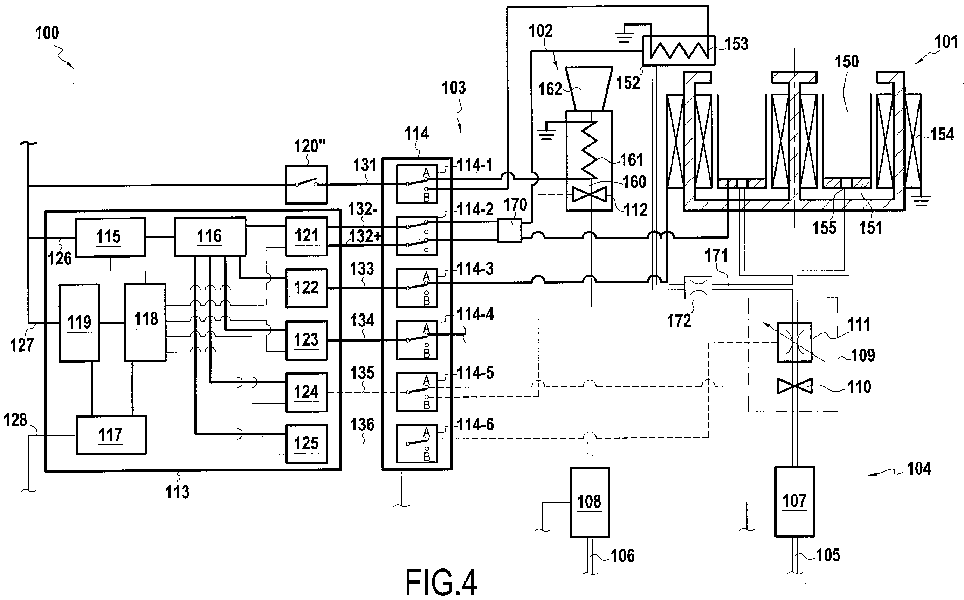

Bien que, dans les deux modes de réalisation précédents, l'alimentation électrique des éléments chauffants du résistojet et de la cathode émettrice du propulseur électrostatique, respectivement, passe à travers l'unité de conditionnement électrique, et notamment à travers l'un des onduleurs, il est également envisageable de contourner l'unité de conditionnement électrique pour l'alimentation électrique de ces éléments. En effet le voltage de fonctionnement des éléments chauffants des deux propulseurs peut être proche de, et même égal à, celui du bus principal d'alimentation, permettant de cette manière leur alimentation électrique directement à partir de celui-ci. Ainsi, dans un troisième mode de réalisation illustré sur la figure 4, la première ligne d'alimentation électrique 131 provient d'un interrupteur 120" directement relié au bus principal d'alimentation 14 et à l'unité de commande 12 de l'engin spatial 10. Bien que, dans le mode de réalisation illustré, l'interrupteur 120" soit séparé et distinct de l'unité de conditionnement électrique 113, il est également envisageable de l'intégrer dans celle-ci. Par ailleurs, dans le mode de réalisation illustré, l'unité 114 de sélection de propulseurs est également externe à l'unité de conditionnement électrique 113, bien que leur intégration soir également envisageable. Les autres éléments du système suivant ce troisième mode de réalisation sont toutefois analogues à ceux du premier mode de réalisation et reçoivent en conséquence les mêmes chiffres de référence sur la figure 4 que sur les figures 2A et 2B.

De cette manière, lors du fonctionnement du système de propulsion spatiale 100 suivant ce troisième mode de réalisation, quand le propulseur électrostatique 101 est sélectionné à travers l'unité 114 de sélection de propulseurs et ses commutateurs 114-1 à 114-6, des signaux transmis par l'unité de commande 12 à l'interrupteur 120" peuvent commander des pulsations de courant sur la première ligne d'alimentation électrique 131 pour réguler le fonctionnement de l'élément chauffant 153 de la cathode émettrice 152 du propulseur électrostatique 101. D'autre part, quand le résistojet 102 est sélectionné à travers l'unité 114 de sélection de propulseurs et ses commutateurs 114-1 à 114-6, ces mêmes pulsations peuvent réguler le fonctionnement de l'élément chauffant 161 du résistojet 102. Pour le reste, le fonctionnement du système 100 de propulsion spatiale suivant ce troisième mode de réalisation est analogue à celui du premier mode de réalisation, notamment en ce qui concerne la régulation de l'alimentation du propulseur électrostatique 101 et du résistojet 102 en fluide propulsif, et la sélection de deux modes de propulsion différents.

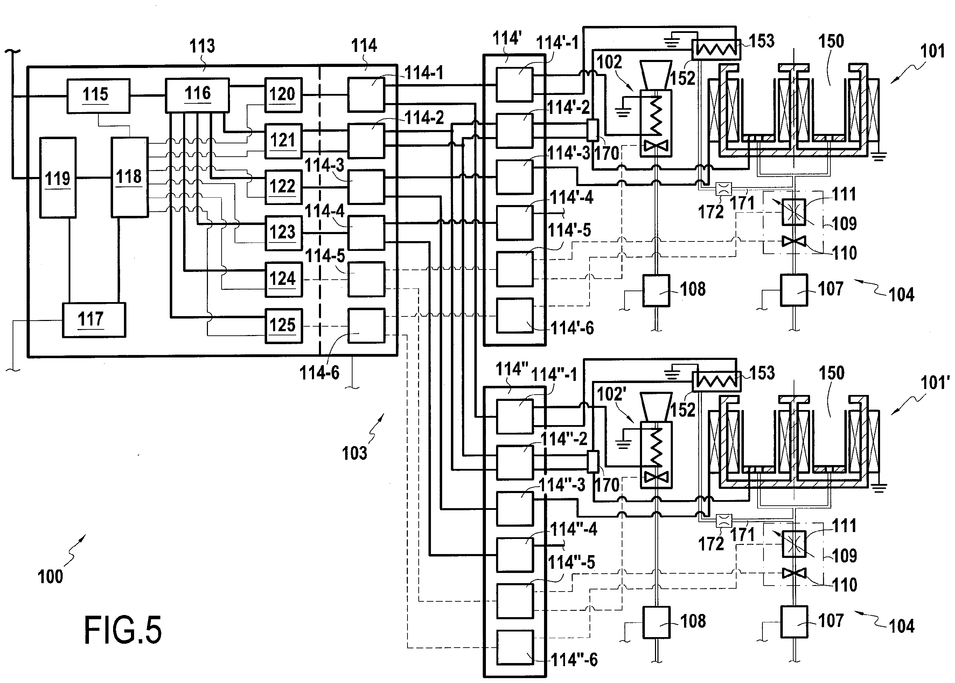

Bien que, dans les trois modes de réalisation précédents, le système de propulsion spatiale ne comprenne qu'un seul propulseur électrostatique et un seul résistojet, les mêmes principes sont également applicables à des systèmes comprenant des pluralités de propulseurs électrostatiques et de résistojets. Ainsi, sur un quatrième mode de réalisation illustré sur la figure 5, le système de propulsion spatiale 100 comprend deux propulseurs électrostatiques 101 et deux résistojets 102, arrangés par exemple en deux paires de propulseurs, formées chacune par un propulseur électrostatique 101 et un résistojet 102, les propulseurs de l'une de ces paires étant orientés en sens opposé à ceux de l'autre. Les deux propulseurs électrostatiques 101 sont reliés à un unique régulateur 107 de pression d'alimentation des propulseurs électrostatiques 101 en gaz propulsif par des lignes 105 d'alimentation en fluide propulsif correspondantes, tandis que les deux résistojets 102 sont aussi reliés à un unique régulateur 108 de pression d'alimentation des résistojets 102 en gaz propulsif par d'autres lignes 106 d'alimentation en fluide propulsif. Par contre, des régulateurs de débit 109 individuels sont installés sur chaque ligne 105 d'alimentation en fluide propulsif des propulseurs électrostatiques 101 afin de réguler séparément le débit d'alimentation de chaque propulseur électrostatique 101 en fluide propulsif. Le circuit d'alimentation en fluide propulsif 104 comprend aussi une vanne 112 d'alimentation en gaz propulsif pour chaque résistojet 102.

En outre, ce système de propulsion spatiale 100 comprend aussi deux unités externes 114', 114" de sélection de propulseurs en complément d'une unité 114 de sélection de propulseurs intégrée dans l'unité 113 de conditionnement électrique. Les trois unités 114,114'114" de sélection de propulseurs sont reliées à l'unité de commande 12 de l'engin spatial 10 pour commander leurs commutateurs respectifs 114-1 à 114-6, 114'-1 à 114'-6, et 114"-1 à 114"-6. Les contacts A de l'unité 114 de sélection de propulseurs sont connectés au propulseur électrostatique 101 ou au résistojet 102 d'une première desdits paires de propulseurs à travers la première unité externe de sélection 114', tandis que les contacts B de l'unité 114 de sélection de propulseurs sont connectés au propulseur électrostatique 101 ou au résistojet 102 de la deuxième desdits paires de propulseurs à travers la deuxième unité externe de sélection 114". Les autres éléments du système suivant ce quatrième mode de réalisation sont analogues à ceux du premier mode de réalisation et reçoivent en conséquence les mêmes chiffres de référence sur la figure 5 que sur les figures 2A et 2B.

Ainsi, en fonctionnement, l'unité de conditionnement électrique 113 peut assurer l'alimentation électrique et commander l'alimentation en fluide propulsif soit d'un propulseur de la première paire soit d'un propulseur de la deuxième paire, suivant une sélection opérée à travers l'unité 114 de sélection de propulseurs. Si la première paire de propulseurs est sélectionnée à travers l'unité de sélection 114, la sélection entre le propulseur électrostatique 101 et le résistojet 102 de cette première paire peut s'effectuer à travers la première unité externe de sélection 114' de manière analogue à la sélection de propulseurs dans les modes de réalisation précédents. De la même manière, si la deuxième paire de propulseurs est sélectionnée à travers l'unité de sélection 114, la sélection entre le propulseur électrostatique 101 et le résistojet 102 de cette deuxième paire peut s'effectuer à travers la deuxième unité externe de sélection 114" de manière analogue à la sélection de propulseurs dans les modes de réalisation précédents. Ainsi, à travers les commutateurs des trois unités de sélection 114,114' et 114", il est possible de choisir entre deux sens de propulsion, et entre deux modes de propulsion dans chaque sens. Pour le reste, le fonctionnement du système 100 de propulsion spatiale suivant ce quatrième mode de réalisation est analogue à celui du premier mode de réalisation, notamment en ce qui concerne la régulation de l'alimentation des propulseurs en fluide propulsif et électricité.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. En particulier, les caractéristiques propres des deuxième et/ou troisième modes de réalisation pourraient également être adaptées à un système comportant une pluralité d'unités de sélection de propulseurs et de propulseurs de chaque type, comme dans le quatrième mode de réalisation. Par ailleurs, bien que le système selon le quatrième mode de réalisation ne comporte que deux paires de propulseurs de types différents, ils serait également envisageable d'y incorporer un plus grand nombre de paires. Par conséquent, la description et les dessins doivent être considérés dans un sens illustratif plutôt que restrictif.

## Revendications

1. Système de propulsion spatiale (100) comprenant au moins :
un propulseur électrostatique (101) avec au moins un premier consommateur électrique qui comprend un élément chauffant (153) d'une cathode émettrice (152) dudit propulseur électrostatique (101) ;
un résistojet (102) ;
un circuit (104) d'alimentation en fluide propulsif ; et
un circuit (103) d'alimentation électrique comportant au moins une première ligne (131) d'alimentation électrique ;
**caractérisé en ce que** le circuit (103) d'alimentation électrique comporte en outre au moins un premier commutateur (114-1,114'-1,114"-1) permettant de choisir entre connecter ladite première ligne (131) d'alimentation électrique, sans conversion ou transformation de courant ou de voltage, à une résistance électrique formant un élément chauffant (161) du résistojet (102) et connecter ladite première ligne (131) d'alimentation électrique, sans conversion ou transformation de courant ou de voltage, à une résistance électrique formant l'élément chauffant (153) de la cathode émettrice (152) du propulseur électrostatique (101).

2. Système de propulsion spatiale (100) spatiale suivant la revendication précédente, dans lequel ledit circuit (104) d'alimentation en fluide propulsif comporte au moins une vanne (110,110') d'alimentation du propulseur électrostatique (101) et au moins une vanne (112) d'alimentation du résistojet (102).

3. Système de propulsion spatiale (100) suivant la revendication 2, comprenant en outre au moins une ligne (135) de commande d'ouverture de vanne et un deuxième commutateur (114-5,114'-5,114"-5) permettant de choisir entre connecter ladite ligne (135) de commande d'ouverture de vanne à la vanne (110,110') d'alimentation du propulseur électrostatique (101) et connecter ladite ligne (135) de commande d'ouverture de vannes à l'au moins une vanne d'alimentation (112) du résistojet (102).

4. Système de propulsion spatiale (100) suivant l'une quelconque des revendications précédentes, dans lequel ledit circuit (103) d'alimentation électrique comprend au moins une unité (114,114',114") de sélection de propulseur dans laquelle au moins ledit premier commutateur (114-1,114'-1,114"-1) est intégré.

5. Système de propulsion spatiale (100) suivant l'une quelconque des revendications précédentes, dans lequel ledit circuit (103) d'alimentation électrique comporte en outre au moins une unité de conditionnement électrique (113) apte à alimenter au moins un autre consommateur électrique du propulseur électrostatique (101) à une tension sensiblement plus élevée que le premier consommateur électrique.

6. Système de propulsion spatiale (100) suivant l'une quelconque des revendications précédentes, dans lequel ledit propulseur électrostatique (101) est un propulseur à effet de Hall.

7. Système de propulsion spatiale (100) suivant l'une quelconque des revendications précédentes, comprenant une pluralité de propulseurs électrostatiques (101).

8. Système de propulsion spatiale (100) suivant la revendication 7, dans lequel ledit circuit (104) d'alimentation en fluide propulsif comprend au moins un régulateur de pression (107) commun à plusieurs desdits propulseurs électrostatiques (101).

9. Système de propulsion spatiale (100) suivant la revendication 7 ou 8, dans lequel ledit circuit (104) d'alimentation en fluide propulsif comprend un régulateur de pression (107) individuel pour au moins un desdits propulseurs électrostatiques (101).

10. Système de commande d'orientation et/ou trajectoire comprenant un système de propulsion spatiale (100) suivant l'une quelconque des revendications précédentes.

11. Engin spatial (10) comprenant un système de propulsion spatiale suivant l'une quelconque des revendications 1 à 9.

12. Procédé de propulsion spatiale comprenant une étape de commutation entre un propulseur électrostatique (101) et un résistojet (102), dans laquelle un premier commutateur (114-1,114'-1,114"-1) est utilisé pour connecter une première ligne (131) d'alimentation électrique, sans conversion ou transformation de courant ou de voltage, à une résistance électrique formant un élément chauffant (161) du résistojet (102) et une connexion ou à une résistance électrique formant un élément chauffant (153) d'une cathode émettrice (152) du propulseur électrostatique (101), pour sélectionner un premier mode de propulsion, dans lequel le résistojet est activé, ou un deuxième mode de propulsion, dans lequel le propulseur électrostatique est activé.

## Patentansprüche

1. Antriebssystem für Raumfahrzeug (100), umfassend mindestens:
ein elektrostatisches Triebwerk (101) mit mindestens einem ersten Stromverbraucher, der ein Heizelement (153) einer Emitterkathode (152) des elektrostatischen Triebwerks (101) umfasst;
einen Resistojet (102);
einen Versorgungskreis (104) mit Antriebsfluid; und
einen elektrischen Versorgungskreis (103), der mindestens eine erste elektrische Versorgungsleitung (131) aufweist;
**dadurch gekennzeichnet, dass** der elektrische Versorgungskreis (103) ferner mindestens einen ersten Umschalter (114-1, 114'-1, 114"-1) aufweist, der gestattet, zwischen Verbinden der ersten elektrischen Versorgungsleitung (131) ohne Strom- oder Spannungs-Konversion oder
- Transformation mit einem elektrischen Widerstand, der ein Heizelement (161) des Resistojets (102) bildet, und Verbinden der ersten elektrischen Versorgungsleitung (131) ohne Strom- oder Spannungs-Konversion oder
- Transformation mit einem elektrischen Widerstand, der das Heizelement (153) der Emitterkathode (152) des elektrostatischen Triebwerks (101) bildet, zu wählen.

2. Antriebssystem für Raumfahrzeug (100) nach vorangehendem Anspruch, wobei der Versorgungskreis (104) mit Antriebsfluid mindestens ein Versorgungsventil (110, 110') des elektrostatischen Triebwerks (101) und mindestens ein Versorgungsventil (112) des Resistojets (102) aufweist.

3. Antriebssystem für Raumfahrzeug (100) nach Anspruch 2, umfassend ferner mindestens eine Ventilöffnungs-Steuerleitung (135) und einen zweiten Umschalter (114―5, 114'―5, 114"―5), der gestattet, zwischen Verbinden der Ventilöffnungs-Steuerleitung (135) mit dem Versorgungsventil (110, 110') des elektrostatischen Triebwerks (101) und Verbinden der Ventilöffnungs-Steuerleitung (135) mit dem mindestens einen Versorgungsventil (112) des Resistojets (102) zu wählen.

4. Antriebssystem für Raumfahrzeug (100) nach einem der vorangehenden Ansprüche, wobei der elektrische Versorgungskreis (103) mindestens eine Triebwerksauswahleinheit (114, 114', 114") umfasst, in der mindestens der erste Umschalter (114-1, 114'-1, 114"-1) integriert ist.

5. Antriebssystem für Raumfahrzeug (100) nach einem der vorangehenden Ansprüche, wobei der elektrische Versorgungskreis (103) ferner mindestens eine elektrische Konditionierungseinheit (113) aufweist, die imstande ist, mindestens einen anderen Stromverbraucher des elektrostatischen Triebwerks (101) mit einer wesentlich höheren Spannung als den ersten Stromverbraucher zu versorgen.

6. Antriebssystem für Raumfahrzeug (100) nach einem der vorangehenden Ansprüche, wobei das elektrostatische Triebwerk (101) ein Triebwerk mit Hall-Effekt ist.

7. Antriebssystem für Raumfahrzeug (100) nach einem der vorangehenden Ansprüche, umfassend eine Vielzahl elektrostatischer Triebwerke (101).

8. Antriebssystem für Raumfahrzeug (100) nach Anspruch 7, wobei der Versorgungskreis (104) mit Antriebsfluid mindestens einen Druckregler (107) umfasst, der mehreren der elektrostatischen Triebwerke (101) gemeinsam ist.

9. Antriebssystem für Raumfahrzeug (100) nach Anspruch 7 oder 8, wobei der Versorgungskreis (104) mit Antriebsfluid einen individuellen Druckregler (107) für mindestens eins der elektrostatischen Triebwerke (101) umfasst.

10. System zur Steuerung der Ausrichtung und/oder Bahn, umfassend ein Antriebssystem für Raumfahrzeug (100) nach einem der vorangehenden Ansprüche.

11. Raumflugkörper (10), umfassend ein Antriebssystem für Raumfahrzeug nach einem der Ansprüche 1 bis 9.

12. Verfahren zum Antrieb eines Raumfahrzeugs, umfassend einen Schritt des Umschaltens zwischen einem elektrostatischen Triebwerk (101) und einem Resistojet (102), bei dem ein erster Umschalter (114-1, 114'-1, 114"-1) verwendet wird, um eine erste elektrische Versorgungsleitung (131) ohne Strom- oder Spannungskonversion oder - Transformation mit einem elektrischen Widerstand zu verbinden, der ein Heizelement (161) des Resistojets (102) bildet, oder mit einem elektrischen Widerstand, der ein Heizelement (153) einer Emitterkathode (152) des elektrostatischen Triebwerks (101) bildet, um einen ersten Antriebsmodus zu wählen, bei dem der Resistojet (102) aktiviert ist, oder einen zweiten Antriebsmodus, bei dem das elektrostatische Triebwerk (101) aktiviert ist.

## Claims

1. A space propulsion system (100) comprising at least:
· an electrostatic thruster (101) with at least a first consumer of electricity that comprises a heater element (153) of an emitter cathode (152) of said electrostatic thruster (101);
· a resistojet (102);
· a propellant fluid feed circuit (104); and
· an electrical power supply circuit (103)comprising at least a first power supply line (131);
**characterized in that** the electrical power supply circuit further comprises at least a first switch (114―1, 114'―1, 114"―1) for selecting between connecting said first power supply line (131), without any current or voltage conversion or transformation, to a resistor forming a heater element (161) of the resistojet (102) and connecting said first power supply line (131), without any current or voltage conversion or transformation, to a resistor forming the heater element (153) of an emitter cathode (152) of the electrostatic thruster (101).

2. A space propulsion system (100) according to any preceding claim, wherein said propellant fluid feed circuit (104) includes at least one valve (110, 110') for feeding the electrostatic thruster (101) and at least one valve (112) for feeding the resistojet (102).

3. A space propulsion system (100) according to claim 2, further comprising at least one valve―opening control line (135) and a second switch (114―5, 114'―5, 114"―5) for selecting between connecting said valve―opening control line (135) to the valve (110, 110') for feeding the electrostatic thruster (101), and connecting said valve―opening control line (135) to at least one feed valve (112) of the resistojet (102).

4. A space propulsion system (100) according to any preceding claim, wherein said power supply circuit (103) comprises at least one thruster selection unit (114, 114', 114") in which at least said first switch (114―1, 114'―1, 114"―1) is integrated.

5. A space propulsion system (100) according to any preceding claim, wherein said power supply circuit (103) further includes at least one power processing unit (113) suitable for powering at least one other electricity consumer of the electrostatic thruster (101) at a voltage that is considerably higher than the first consumer of electricity.

6. A space propulsion system (100) according to any preceding claim, wherein said electrostatic thruster (101) is a Hall effect thruster.

7. A space propulsion system (100) according to any preceding claim, having a plurality of electrostatic thrusters (101).

8. A space propulsion system (100) according to claim 7, wherein said propellant fluid feed circuit (104) includes at least one pressure regulator (107) common to a plurality of said electrostatic thrusters (101).

9. A space propulsion system (100) according to claim 7 or claim 8, wherein said propellant fluid feed circuit (104) includes an individual pressure regulator (107) for at least one of said electrostatic thrusters (101).

10. An attitude and/or trajectory control system including a space propulsion system (100) according to any preceding claim.

11. A spacecraft (10) including a space propulsion system according to any one of claims 1 to 9.

12. A space propulsion method including a step of switching between an electrostatic thruster (101) and a resistojet (102), wherein a first switch (114-1, 114'-1, 114"-1) is used for connecting a first electrical power supply line (131), without any current or voltage conversion or transformation, to a resistor forming a heater element (161) of the resistojet (102) or to a resistor forming a heater element (153) of an emitter cathode (152) of the electrostatic thruster (101) in order to select a first propulsion mode in which the resistojet (102) is activated or else a second propulsion mode in which the electrostatic thruster (101) is activated.
